## Europäisches Patentamt
## European Patent Office
## Office européen des brevets

(11) Veröffentlichungsnummer: **0 128 173**
**B1**

(12) # EUROPÄISCHE PATENTSCHRIFT

(45) Veröffentlichungstag der Patentschrift:
**18.02.87**

(51) Int. Cl.⁴: **A 01 B 79/00,** A 01 C 23/02

(21) Anmeldenummer: **84900030.2**

(22) Anmeldetag: **10.12.83**

(86) Internationale Anmeldenummer:
**PCT/DE 83/00207**

(87) Internationale Veröffentlichungsnummer:
**WO 84/02251 (21.06.84** Gazette 84/15)

(54) **VORRICHTUNG ZUM AUFBRECHEN PFLANZENBAULICH GENUTZTEN BODENS.**

(30) Priorität: **11.12.82 DE 3245912**

(43) Veröffentlichungstag der Anmeldung:
**19.12.84 Patentblatt 84/51**

(45) Bekanntmachung des Hinweises auf die Patenterteilung:
**18.02.87 Patentblatt 87/8**

(84) Benannte Vertragsstaaten:
**AT BE CH FR GB LI NL SE**

(56) Entgegenhaltungen:
**FR - A - 1 399 564**
**GB - A - 1 379 647**
**US - A - 2 083 153**
**US - A - 2 323 773**
**US - A - 3 886 874**

(73) Patentinhaber: **Zinck, Eugen, Hüffelsheimer Strasse 2, D-6550 Bad Kreuznach (DE)**

(72) Erfinder: **Zinck, Eugen, Hüffelsheimer Strasse 2, D-6550 Bad Kreuznach (DE)**

(74) Vertreter: **Jackisch, Walter, Dipl.-Ing., Menzelstrasse 40, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zum Aufbrechen pflanzenbaulich genutzten Bodens mit den Merkmalen des Oberbegriffs des Anspruches 1.

Bei einem bewährten Bodenbearbeitungsverfahren (DE-C-2 742 606) wird mittels eines Schnellschlussventils Druckluft schlagartig über eine Sonde in den Boden eingebracht, wodurch der Boden aufgebrochen wird. Dazu kann durch die strömende Luft mittels eines Injektionsventils ein Substrat, zum Beispiel Füllstoff oder Dünger, aus einem separaten Vorratsbehälter oder dergleichen durch die Sonde in den Boden eingetragen werden, so dass ein Verbau der Kanäle im aufgebrochenen Boden sowie ein Düngereintrag mit Sauerstoffzuführung möglich ist. Durch die getrennte Substratzuführung aus einem von der Vorrichtung entfernten Behälter sind Störungen bei der Einbringung des Substrats in den Boden nicht auszuschliessen und es können Erschwernisse bei der Handhabung der Vorrichtung auftreten.

Es ist auch eine Vorrichtung bekannt (US-A-2 323 773), mit der in den Boden Druckluft oder flüssige bzw. staubförmige Düngemittel über eine in den Boden einzubringende Sonde eingespeist werden können, um die Erde unterhalb der Bodenoberfläche zu belüften und/oder zu düngen, um durch Sauerstoff- und/oder Düngemittelanreicherung günstigere Wachstumsbedingungen für darüber befindliche Pflanzen zu schaffen. Die bekannte Vorrichtung weist einen zylindrischen Hauptbehälter auf, in dessen Oberteil, senkrecht zu seiner Längsachse eine Flüssigkeitszufuhrleitung mit Handventilbetätigung und dieser Leitung gegenüberliegend eine Zufuhrleitung für die Druckluft aufweist. Im oberen Teil des zylindrischen Hauptbehälters und oberhalb der beiden sich gegenüberliegenden Einmündungen der Flüssigkeits- und der Druckluftleitung befindet sich ein Sammelbehälter für z.B. pulverförmige Bodenverbesserungsstoffe, der ein von Hand zu betätigendes Ventil aufweist, das sich in den darunter befindlichen zylindrischen Hauptbehälter gegen Federdruck öffnet. Der Hauptbehälter seinerseits ist nach unten zu ebenfalls durch ein federbelastetes Ventil abgeschlossen. Die Druckluftleitung weist eine By-Pass-Leitung sowie Doppelventile auf, mit denen die Bedienungsperson die Druckluft entweder zum zylindrischen Hauptbehälter oder über die By-Pass-Leitung und eine die Sonde koaxial umgebende Ringleitung zu dem unten liegenden Sondenaustritt leiten kann.

Mittels dieser Doppelventile kann Druckluft solange in den Boden eingespeist werden, solange die Ventile von der Bedienungsperson offengehalten sind, wobei gleichzeitig bei Öffnung der Ventile in der Flüssigkeitszufuhrleitung auch flüssiges Düngemittel oder über den eingebauten Vorratsbehälter pulveriger Dünger ausgetragen werden kann.

Mit der bekannten Vorrichtung kann somit über eine längere Zeit Luft in den Boden eingebracht werden, um den Boden mit Luft und/oder Düngemittel in einem gewünschten Masse anzureichern. Ein schlagartiges Aufbrechen des oberhalb der Sondenaustrittsöffnung bis zur Bodenoberfläche reichenden Bodens mittels eines momentan wirkenden Druckluftstosses, bei dem die Bodenschicht bis zur Oberfläche eruptionsartig aufgebrochen und angehoben wird, ist mit der bekannten Vorrichtung weder vorgesehen noch möglich.

Ferner ist die bekannte Vorrichtung nicht dazu vorgesehen, unmittelbar anschliessend an das schlagartige Aufbrechen des Bodens, also unmittelbar an den Drucklufteruptionsstoss, die hierbei gebildeten zahlreichen Spalten und Risse im Boden mit festem, vorzugsweise granulatartigem Substrat zu verbauen, wodurch die Spalten, Risse usw. derart mechanisch abgestützt werden, dass sie für längere Zeit als solche erhalten bleiben.

Ausgehend von der eingangs erwähnten Vorrichtung zum Aufbrechen pflanzenbaulich genutzten Bodens mit einer in den Boden einbringbaren Sonde, durch die über ein Schnellschlussventil schlagartig Druckluft und über ein Injektionsventil Substrat in den Boden einbringbar sind, liegt der Erfindung die Aufgabe zugrunde, eine Vorrichtung dieser Art dahingehend weiterzubilden, dass eine einfachere Handhabung und eine verbesserte Steuerung bei optimalerer schlagartiger Einbringung der Druckluft und unmittelbar anschliessend des Substrates in den Boden erzielt wird.

Diese Aufgabe wird erfindungsgemäss durch die kennzeichnenden Merkmale des Anspruchs 1 gelöst.

Bevorzugte Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar:

Fig. 1 einen oberen Teil mit dem Zwischenbehälter der erfindungsgemässen Vorrichtung in einer geschnittenen Seitenansicht mit Teildarstellungen gemäss Fig. 1a und 1b,

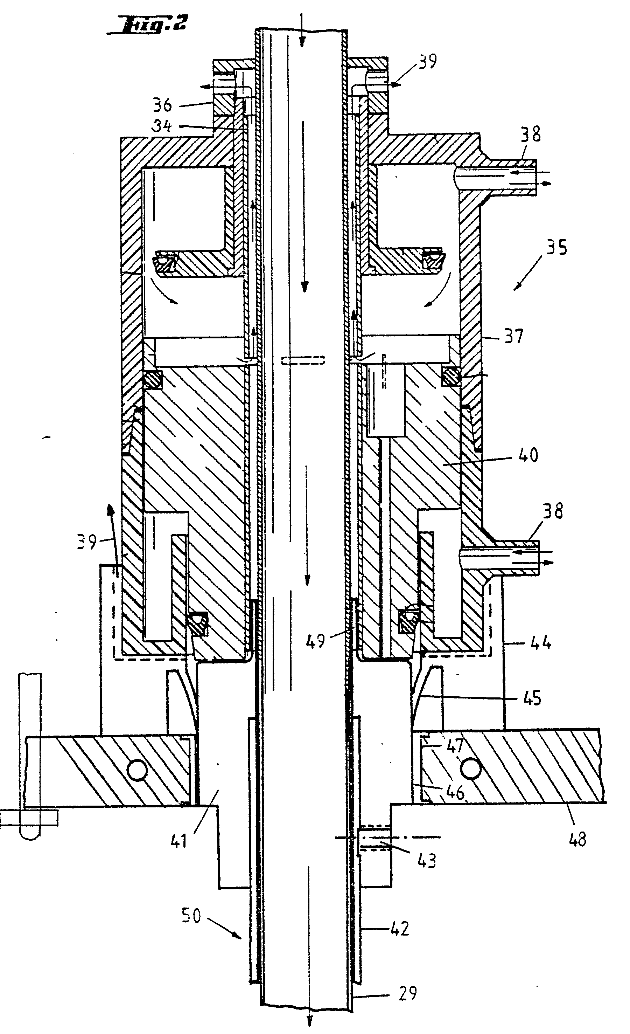

Fig. 2 eine geschnittene Teilansicht der erfindungsgemässen Vorrichtung mit unter dem Zwischenbehälter der Fig. 1 angeordneter Sondenramme,

Fig. 3 eine geschnittene Teilansicht der unter der Sondenramme der Fig. 2 angeordneten Sonde und

Fig. 4 einen oberen Teil mit dem Zwischenbehälter einer anderen Ausführungsform der erfindungsgemässen Vorrichtung in einer geschnittenen Seitenansicht ähnlich der Fig. 1.

Die in der Zeichnung beispielhaft dargestellten Vorrichtungen dienen dem Aufbrechen pflanzenbaulich genutzten Bodens, wobei Druckluft, die zum Beispiel von einem Kompressor erzeugt wird, in einer Tiefe von etwa 50 cm bis etwa 85 cm und tiefer in den Boden schlagartig als Eruptionsstoss eingebracht wird, so dass der Boden in definierten Bereichen aufbricht und aufgelockert wird. Der Boden wird dabei insbesondere in den strukturell vorgezeichneten Bruchlinien aufgerissen und durchlässig gemacht, so dass die Bodenstruktur selbst nicht geschädigt wird. Die Kanäle im Eruptionsauflockerungsbereich können mit Hilfe der erfindungsgemässen Vorrichtung durch unmittelbar nach dem Beginn des Druckstosses eingebrachte Füllstoffe verbaut und somit abgestützt werden. Es kann aber auch ein anderes Substrat, wie zum Beispiel ein Düngemittel oder auch ein Heilmittel, kurz nach dem Beginn des Druckstosses durch Injektionswirkung mit Hilfe der Druckluft in die Kanäle des Eruptionsauflockerungsbereiches eingebracht werden, wobei durch den gleichzeitigen Sauerstoffeintrag eine optimale Aufbereitung des Bodens erreicht wird.

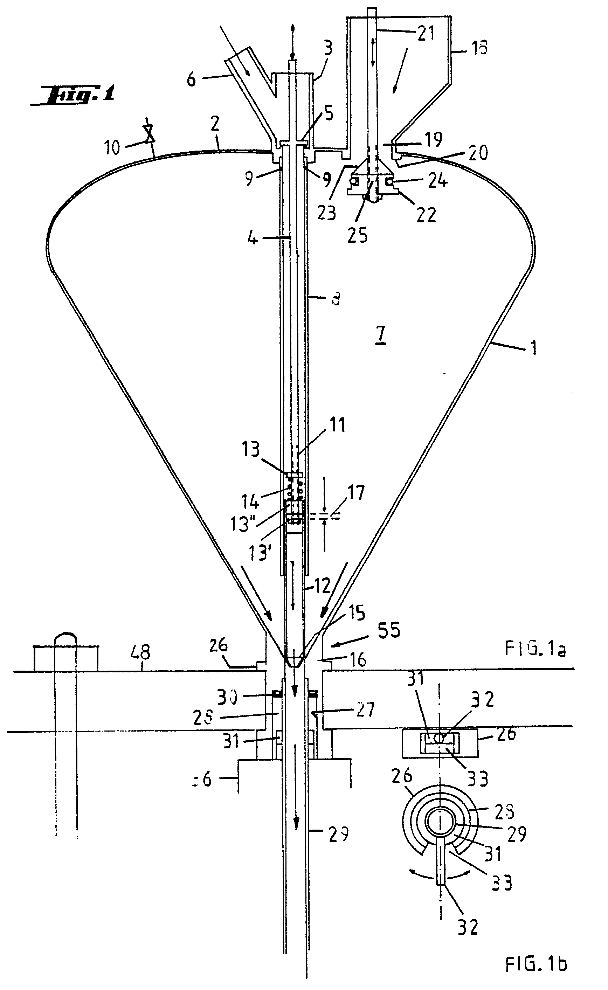

In der Fig. 1 ist für das Substrat erfindungsgemäss ein Zwischenbehälter 1 vorgesehen, der im wesentlichen wie ein auf die Spitze gestellter Kegel beziehungsweise wie ein geschlossener Trichter ausgeführt ist. Auf der Oberwandung 2 des Zwischenbehälters 1 ist in dessen vertikaler Mittenachse ein Schnellschlussventil 3 mit einem an einer Hubstange 4 ausgebildeten Dichtungsteller 5 angeordnet. Die Hubstange 4 ist in Richtung des axialen Doppelpfeils bewegbar. Bei einer Bewegung nach oben hebt der Dichtungsteller 5 ab und gibt das Schnellschlussventil 3 schlagartig frei, so dass Druckluft über den Anschlussstutzen 6 des Schnellschlussventils 3 nach unten einströmen kann. Im Innenraum 7 des vorzugsweise aus einem durchsichtigen Kunststoff gebildeten Zwischenbehälters 1 befindet sich eine vertikale Rohrhülse 8, die an der Unterseite des Schnellschlussventils 3 befestigt ist. Dicht dahinter beziehungsweise darunter sind Querbohrungen 9 in der Rohrhülse 8 ausgebildet, durch die ein Teil der Druckluft beim Öffnen des Schnellschlussventils 3 in den Innenraum 7 einströmen kann, so dass ein Druckpolster über dem im Zwischenbehälter 1 befindlichen Substrat aufgebracht wird, wodurch das Substrat mit Druckunterstützung aus dem Zwischenbehälter 1 ausströmen kann. Damit der Druck im Zwischenbehälter 1 nicht zu hoch ansteigen kann und auf jeden Fall immer unter einem maximal zulässigen Wert bleibt, ist oben auf dem Zwischenbehälter 1 ein Überdruckventil 10 angeordnet, das auch in einem gewissen Bereich einstellbar sein kann.

Die Hubstange 4 erstreckt sich innerhalb der Rohrhülse 8 nach unten und weist an ihrem Endbereich ein Gewinde 11 auf, an dem ein Injektorrohr 12 befestigt ist. Dazu sind zwei Schraubenmuttern 13, 13' vorgesehen. Zwischen der oberen Schraubenmutter 13 und dem oberen Ende des Injektorrohres 12 ist eine schraubenförmige Druckfeder 14 angeordnet. Das Injektorrohr 12 ist im unteren Endbereich der Rohrhülse 8 verschiebbar gelagert und während der durch die Hubstange 4 erzielten Axialverschiebung geführt. Das Injektorrohr 12 ist somit über die Hubstange 4 mit dem Schnellschlussventil 3 gekoppelt. Das untere Ende des Injektorrohres 12 ist konisch als düsenförmiger Druckluftauslass 15 ausgebildet, dessen Wandung durch die Kraft der Druckfeder 14 dicht schliessend gegen einen Injektorventilsitz 16 im Bereich der unteren Verjüngung des Zwischenbehälters 1 gedrückt wird. Der Druckluftauslass 15 und der Injektorventilsitz 16 bilden somit ein Injektionsventil 55, das verzögert zum Schnellschlussventil 3 geöffnet wird und dem Substrat für den Austritt aus dem Zwischenbehälter 1 den Weg freigibt. Der mit hoher Geschwindigkeit aus dem Druckluftauslass 15 ausströmenden Luft wird damit aufgrund der Sogwirkung das Substrat beigemischt. Durch Verstellen der Schraubenmutter 13 beziehungsweise 13' kann die Kraft der Druckfeder 14 entsprechend den Erfordernissen vorgewählt werden und es kann ein Spiel 17 eingestellt werden, wodurch die zeitliche Abfolge zwischen dem Aufbrechen des Bodens und dem Einmischen beziehungsweise Zuführen des Substrats je nach Erfordernis eingestellt werden kann.

Der Zwischenbehälter 1 weist oben an seiner Oberwandung 2 für die Substratzuführung in den Zwischenbehälter 1 einen Stutzen 18 mit einer Einfüllöffnung 19 auf. Die Einfüllöffnung 19 ist von einem dem Innenraum 7 zugewandten Halterand 20 begrenzt. An einer die Einfüllöffnung 19 durchsetzenden Stange 21 ist ein Verschlussteil 22 angeordnet, dessen Durchmesser grösser ist als der Durchmesser der Einfüllöffnung 19 und vom Innenraum 7 her gegen den Halterand 20 durch Axialverschiebung der Stange 21 pressbar ist. Bei geöffnetem Verschlussteil 22 kann das Substrat über Konusflächen 23 verteilt in den Innenraum 7 einströmen. Für eine gute Abdichtung des Verschlussteils 22 weist dieser einen Dichtungsring 24 auf. Der Verschlussteil 22 ist über ein Schraubgewinde 25 an der Stange 21 nachstellbar gelagert.

An dem unteren verjüngten Ende weist der Zwischenbehälter 1 einen Befestigungsstutzen 26 auf, der eine Ausnehmung 27 besitzt, in der sich eine Führungshülse 28 befindet. In der Führungshülse 28 ist ein Innenrohr 29 mit seinem Endbereich unter dem Injektorventilsitz 16 dreh- und verschiebbar gelagert. Über eine das Innenrohr 29 umgreifende Nutringdichtung 30 in der Ausnehmung 27 über der Führungshülse 28 wird die erforderliche Abdichtung in diesem Bereich erzielt.

Das Innenrohr 29 besitzt einen Bund 31, der ebenfalls im Bereich der Führungshülse 28 liegt und, wie die Fig. 1a und 1b verdeutlichen, einen Drehhebel 32 besitzt. Der Drehhebel 32 ist für die Bedienung vorgesehen und ragt durch einen Durchbruch 33 der Führungshülse 28 und des Befestigungsstutzens 26 radial nach aussen. Der Durchbruch 33 ist so gross ausgeführt, dass der Drehhebel 32 in verschiedenen Richtungen verschwenkt werden kann, so dass das Innenrohr 29 sowohl etwas um seine Achse gedreht als auch in Axialrichtung verlagert werden kann.

Der Zwischenbehälter 1 ist über den Befestigungsstutzen 26 mit einer einem Steuerrohr 34 einer Sondenramme 35 zugehörigen Mutter 36 am Gehäuse 37 der Sondenramme 35 befestigt. Die Sondenramme 35 wird pneumatisch betrieben und weist entsprechende Mediumsanschlüsse 38 sowie Abluftleitungen 39 zur Steuerung eines im Gehäuse 37 hin und her bewegbaren Rammkörpers 40 auf. Der Rammkörper 40 wirkt auf einem

Amboss 41, in dem ein das Innenrohr 29 umhüllendes Mantelrohr 42 über eine Schraube 43 befestigt ist. Am Unterteil des Gehäuses 37 ist ein Distanzring 44 vorgesehen, der Dichtlippen 45 besitzt, die an der Umfangsfläche 46 des Ambosses 41 anliegen. Der Amboss 41 selbst ist in einer Gleitbuchse 47 geführt, die in einem Haltebügel 48 angeordnet ist. Zwischen dem Steuerrohr 34 und dem Innenrohr 29 sind über dem Amboss 41 Distanzzungen 49 vorgesehen, so dass eine einwandfreie Ausrichtung gegeben ist. Der Rammkörper 40 wirkt somit ausschliesslich auf den Amboss 41, so dass die Schlagenergie ausschliesslich auf das die Sonde 50 mitbildende Mass des Mantelrohrs 42 übertragen wird. Dadurch wird eine hohe Energieausnutzung erreicht, da die Schlagenergie nicht anderweitig verbraucht wird.

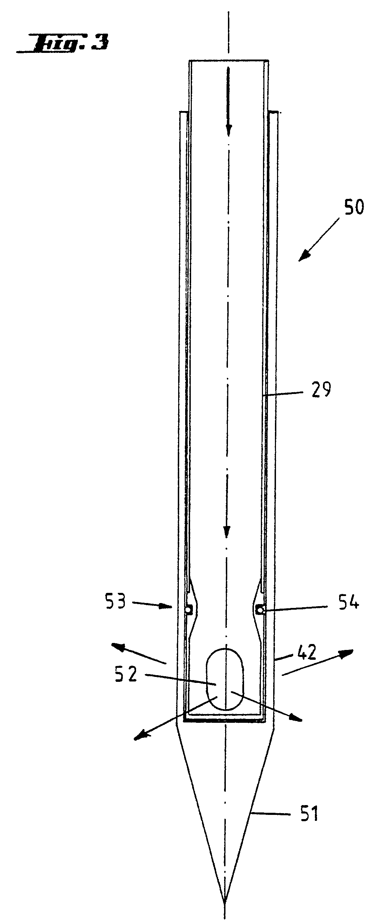

Das Mantelrohr 42, in dem das Innenrohr 29 verdrehbar gelagert ist, besitzt gemäss Fig. 3 ein vorderes Spitzende 51. Kurz vor dem Ende des Innenrohres 29 sind radial gegenüberliegend Austrittsöffnungen 52 im Mantelrohr 42 ausgebildet. Das Innenrohr 29 weist dazu einen Verschlusskopf 53 mit einer beim Eintreiben des Sondenrohrs in den Boden gegen die Innenfläche des Mantelrohrs 42 wirkenden Dichtung 54 auf. Wenn keine Druckluft beziehungsweise kein Substrat durch die Sonde 50 in den Boden eingetragen wird, ist das Innenrohr 29 über den Drehhebel 32 so im Mantelrohr 42 verdreht, dass die Austrittsöffnungen 52 versperrt sind. Für einen Austritt der Druckluft und/oder des Substrats wird das Innenrohr 29 in seine andere Position gedreht, so dass die Austrittsöffnung 52 freigegeben ist. Bei den vorliegenden Ausführungsbeispielen ist die Sonde 50 mit der Sondenramme 35 und dem darauf angeordneten Zwischenbehälter 1 so ausgeführt, dass ein baueinheitlich kompaktes Handgerät gegeben ist, das von einer einzigen Person gehandhabt und bedient werden kann. Darüber hinaus kann es besonders vorteilhaft sein, die erfindungsgemässe Vorrichtung so auszuführen und anzuwenden, dass sie an einer hydraulischen Hubvorrichtung eines Schleppers befestigt und damit verfahren werden kann, wobei die Sonde 50 in Längsrichtung praktisch parallel unter der Oberfläche liegt und kontinuierlich durch den Boden bewegt wird. Dabei wird Druckluft und/oder Substrat in Intervallen schlagartig als Eruptionsstoss aus der Sonde 50 freigesetzt. Bei dieser Ausführung kann der Zwischenbehälter 1 über der Sonde 50 an der Hubvorrichtung des Schleppers eventuell mit zusätzlichen Aggregaten, wie zum Beispiel Kompressor und Substrat-Vorratsbehälter, befestigt sein. Eine Sondenramme ist hierbei in der Regel nicht erforderlich, da über die hydraulische Hubvorrichtung die Sonde 50 in den Boden eingebracht und herausgezogen werden kann.

Mit der erfindungsgemässen Vorrichtung wird der Vorteil erreicht, den pflanzenbaulich zu nutzenden Boden in mehr ökosystemarer Art als mit herkömmlichen Pflügen oder dergleichen zu lokkern. Dabei ist ein wesentlich kleinerer Energieeinsatz als beim Pflügen erforderlich. Ein wesentlicher Vorteil besteht zudem darin, dass mit der erfindungsgemässen Vorrichtung eine optimale Verbauung von Erdspalten und Rissen durch die unmittelbar folgende Substrateinbringung erreicht wird. Eine solche Verbauung der Erdspalten hat eine grosse Langzeitwirkung. Insbesondere nach mehrmaliger Anwendung wird dabei ein dichtes Versorgungsadernetz erzielt, welches die Möglichkeit schafft, bei der späteren Bearbeitung oftmals nur eine flachgründige Saatbeetbereitung durchzuführen.

Bei der Bearbeitung des Bodens wird zweckmässig so vorgegangen, dass die Spitze der Sonde 50 an der Stelle auf den Boden gesetzt wird, von der aus der Aufbruch erfolgen soll. Die Sonde 50 wird dann mittels der druckluftbetriebenen Sondenramme 35 bis zu der gewünschten Lockerungstiefe durch Betätigung eines entsprechenden Ventils für die Druckluft der Ramme eingetrieben. Zur Herstellung eines feingegliederten und engbegrenzten Aufbruchs sowie zur Einbringung von Verbauungs-Substrat, organischen Substanzen, Dünger und Heilmitteln kann die Sonde 50 zum einen etwa 45 cm bis 50 cm tief in den Boden eingebracht werden. Durch ein nachfolgendes tieferes Einbringen bis auf etwa 85 cm und tiefer kann ein weitflächiger Aufbruch erreicht werden, in dessen Risse und Spalten ebenfalls Verbauungs-Substrate, mineralischer Dünger und Heilmittel aus dem Zwischenbehälter 1 der erfindungsgemässen Vorrichtung eingebracht werden können. Die Sonde 50 kann somit im wesentlichen beliebig tief in den Boden eingebracht werden, so dass für den Aufbruch klar definierte Verdichtungszonen, Verbauungen, Dünge- und Heilzonen erreicht werden können.

Nachdem die Sonde 50 auf das entsprechende Tiefenmass eingetrieben worden ist, erfolgt das Befüllen des Zwischenbehälters 1. Sodann werden die Austrittsöffnungen 52 im Spitzenbereich der Sonde 50 durch entsprechendes Verdrehen des Innenrohres 29 geöffnet. Anschliessend erfolgt die schnelle Betätigung des Schnellschlussventils 3. Dadurch wird der Weg für die Druckluft durch die Rohrhülse 8 und das Injektorrohr 12 zum Druckluftauslass 15 zum Innenrohr 29 und den Austrittsöffnungen 52 freigegeben, so dass durch den schlagartigen Eruptionsstoss Spalten, Risse und Strukturlinien im Erdbereich gebildet werden, wobei Gasmoleküle eindringen und der Boden aufgebrochen und aufgeweitet wird. Die Zeitdauer beträgt dabei nur einen kleinen Bruchteil einer Sekunde. Kurz nach der Betätigung des Schnellschlussventils 3 wird der Substratzugang durch Anheben des Injektorrohres 12 geöffnet. Der düsenförmige Druckluftauslass 15 hebt dabei vom Injektorventilsitz 16 ab, so dass das Injektionsventil 55 geöffnet ist. Die Öffnung wird automatisch bewirkt durch die rasche Betätigung des Schnellschlussventils 3 über die Hubstange 4, indem sich die untere Schraubenmutter 13' gegen die Buchse 13" anlegt, an der das Injektorrohr 12 befestigt ist, so dass beim weiteren Hochheben der Hubstange 4 das Injektorrohr 12 ebenfalls nach oben gezogen wird und der Druckluftauslass 15 vom Injektorventilsitz 16 abhebt und damit das Injektionsventil 55 öffnet. Der zeitliche Versatz für die Substrataustragung kann durch die einstellbare Schraubenmutter 13' am unteren Ende der Hubstange 4 gewählt werden, so dass der Druckluftauslass 15 nach etwa 2 bis 3 mm Hubbewegung vom Injektorventilsitz 16 abhebt. Damit ist sichergestellt, dass das Substrat exakt im Augenblick des Aufbruches des Bodens, also im Augenblick höchster Energiefreisetzung sowie der grössten Weitung der Spalten und Risse und der höchsten Strömungsgeschwindigkeit der Druckluft beigemischt wird. Die Luft transportiert die beigemischten Substrate, die auch als Kunststoffgranulat ausgeführt sein können, in die Risse und Spalten des Bodens. Pulverförmige Stoffe schlagen sich fein verteilt an den feuchten Wänden nieder, körnige Stoffe und Granulate bleiben an den Engstellen hängen und füllen die Spalten und Risse. Der gesamte Vorgang, bei dem für die Aufbringung von etwa 3 l Substrat etwa 30 l auf 20 bar vorgespannter Luft erforderlich sind, wobei demnach etwa 600 l durch den Boden strömen, dauert etwa zwischen einer dreiviertel und eineinhalb Sekunden.

Nach dem Druckluft- und Substrateintrag wird die Sonde 50 durch Zurückdrehen des Innenrohres 29 geschlossen. Danach kann die Sonde 50 wie beschrieben tiefer in den Boden eingebracht werden oder mittels der Vorrichtung aus dem Boden herausgehoben werden, um anschliessend an einer anderen Stelle in den Boden eingetrieben zu werden.

Systematische Praxisanwendungen haben ergeben, dass der Boden um so wirkungsvoller aufgebrochen und verbaut werden kann, je schneller das Energiepotential beziehungsweise die Druckluft und anschliessend das Substrat beigesetzt werden. Die Dimensionierung der erfindungsgemässen Vorrichtung wird in jedem Falle vom Einsatz- beziehungsweise Verwendungszweck her vorbestimmt. Praktisch bedeutet dies, dass sowohl die Einzelsonde für den Aufbruch bis zum Beispiel 50 cm Tiefe in einem leistungsfähigen Fahrgerät ebenso dimensioniert sein muss wie ein entsprechendes Handgerät. Damit ist bei dieser Arbeitstiefe ein Mindestpotential für den optimalen Aufbruch erforderlich. Eine weitere Anhebung des Potentials kann darüber hinaus keine wesentliche Wirkungssteigerung bewirken und ist praktisch somit zwecklos. Es hat sich herausgestellt, dass ein Energiepotential von zirka 30 l auf 20 bar vorgespannter Luft ein Optimum bei 50 cm Arbeitstiefe darstellen. Für die Freisetzung ist dabei während des Vorgangs an allen Stellen des Luftweges möglichst ein Durchlass von etwa 5 cm² zu gewährleisten. Mit einer solchen Vorrichtung können bei dem genannten Potential absolut zuverlässig etwa 3 l Substrat in die geweiteten Spalten und Risse eingebracht werden. Dabei werden im Boden etwa 2 m² Spaltenwände und weit mehr beaufschlagt und verbaut und zum Beispiel mit Düngekalk bepudert und offengehalten.

Die Zuleitung vom Druckluftbehälter zum Schnellschlussventil 3 sollte möglichst kurz und mit einem grossen Durchlassquerschnitt ausgestattet sein. Fehlbedienungen werden durch geeignete Sicherheitsvorkehrungen (Verriegelungen) ausgeschlossen, so dass ein zuverlässiger Verfahrensablauf gewährleistet werden kann. Das Ingangsetzen der Sondenramme 35 kann nur nach Freigabe durch die Schlagposition des auf das Mantelrohr 42 wirkenden Ambosses 41 erfolgen. Eine unzulässige Auslösung des Schnellschlussventils 3 wird durch eine Verriegelung verhindert, die dann gelöst wird, wenn das Innenrohr 29 zur Freigabe der Austrittsöffnungen 52 in die entsprechende Offenstellung gedreht wird. Durch Zurückdrehen des Innenrohres 29 wird das Hubventil des Hubzylinders freigegeben.

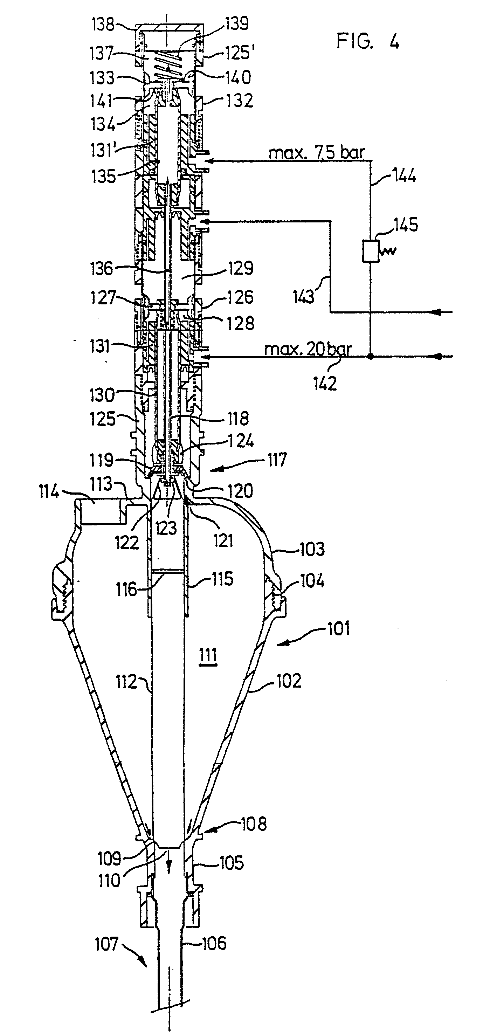

Die in der Fig. 4 dargestellte Ausführung der erfindungsgemässen Vorrichtung ist im wesentlichen ähnlich der vorbeschriebenen Ausführungsform ausgeführt, doch besteht bei der Ausführungsform der Fig. 4 keine mechanische Koppelung zwischen dem Schnellschlussventil und dem Injektionsventil. Es ist bei dieser Ausführung gemäss Fig. 4 für eine erhöhte Funktionssicherheit eine ausschliesslich druckabhängige Zwangssteuerung der Injektionsventilöffnung für den Substrateintrag in den Boden gegeben. Der trichterförmige Zwischenbehälter 101 besteht aus einem Unterteil 102 und einem Oberteil 103, die über ein Gewinde 104 miteinander verschraubt sind. An der unteren Verjüngung des Unterteils 102 des Behälters 101 ist der Befestigungsstutzen 105 ausgebildet, in dem das Innenrohr 106 der in den aufzubrechenden Boden einbringbaren Sonde 107 angeordnet ist. In der unteren Verjüngung des Zwischenbehälters 101 ist zudem das Injektionsventil 108 angeordnet, das aus dem am Unterteil 102 ausgebildeten Injektorventilsitz 109 und aus der konischen Wandung des düsenförmig ausgebildeten Druckluftauslasses 110 des koaxial zur vertikalen Längsmittenachse des Zwischenbehälters 101 in dessen Innenraum 111 angeordneten Injektorrohres 112 besteht.

An einer Seite der Oberwandung 113 befindet sich das Überdruckventil 114. Koaxial zur vertikalen Längsmittenachse des Zwischenbehälters 101 ist an der Oberwandung 113 zudem eine in den Innenraum 111 hineinragende Rohrhülse 115 angeordnet, in der das Injektorrohr 112 axial verschiebbar geführt und über eine Ringdichtung 116 abgedichtet ist.

Auf der Oberwandung 113 des Zwischenbehälters 101 ist das Schnellschlussventil 117 angeordnet, das eine am unteren Ende der Hubstange 118 angeordnete Dichtung 119 aufweist, deren Aussenrand an einem Ventilsitz 120 anliegt. Unterhalb der Dichtung 119 ist am oberen Teil der Rohrhülse 115 zur Belüftung des Innenraums 111 eine Querbohrung 121 ausgebildet. Das Oberende 122 des Injektorrohres 112 ist am unteren Ende der Hubstange 118 über eine Schraubenmutter 123 befestigt, mit deren Hilfe auch eine Feineinstellung für eine exakte Dichtfunktion am Injektorventilsitz 109 erzielt werden kann. Dicht über der Dichtung 119 des Schnellschlussventils 117 ist in einer Gehäusewandung des Schnellschlussventils 117 die Öffnung 124 des Anschlussstutzens für die vom Kompressor zugeführte Druckluft ausgebildet.

Auf das im wesentlichen rohrförmige Ventilgehäuse 125 ist koaxial ein Pneumatikzylinder 126 aufgeschraubt, in dem ein Kolben 127 axial verstellbar geführt ist. Der Kolben 127 begrenzt nach unten hin eine Druckkammer 128 und nach oben hin eine Gegendruckkammer 129. Am Kolben 127 ist zudem ein nach unten gerichtetes Kolbenrohr 130 angeordnet, das in einer Hülse 131 abgedichtet geführt ist und an dessen unterem Ende die Dichtung 119 des Schnellschlussventils 117 mit einem entsprechenden Anschlussteil befestigt ist.

Auf den Pneumatikzylinder 126 ist koaxial ein Druckluftzylinder 132 aufgeschraubt, in dem ein Hubkolben 133 axial verschiebbar gelagert ist. Der Hubkolben 133 begrenzt nach unten hin eine Arbeitskammer 134 und weist ein nach unten gerichtetes Stösselrohr 135 auf, das in einer Hülse 131' abgedichtet geführt ist und an dessen unterem Ende die ebenfalls abgedichtet geführte Hubstange 118 befestigt ist.

Die Hubstange 118 des vorliegenden Ausführungsbeispiels besitzt eine in Längsrichtung als durchgehende Bohrung ausgeführte Luftleitung 136, so dass ein freier Luftdurchgang vom Injektorrohr 112 durch die Hubstange 118, das Stösselrohr 135 und durch eine Bohrung des Hubkolbens 133 in eine Staudruckkammer 137 hinein besteht. Diese Staudruckkammer 137 des Druckluftzylinders 132 ist vom Hubkolben 133 mitbegrenzt. Oben ist das Gehäuse 125' des Druckluftzylinders 132 von einem aufgeschraubten Deckel 138 abgeschlossen. In der Staudruckkammer 137 befindet sich eine Druckfeder 139, die sich einerseits am Deckel 138 abstützt und mit ihrem unteren Ende gegen die Staudruckfläche 140 des Hubkolbens 133 wirkt. Diese Staudruckfläche 140 ist wesentlich grösser ausgeführt als die nach unten gerichtete Arbeitsfläche 141 des Hubkolbens 133.

Sowohl der Druckkammer 128 des Pneumatikzylinders 126 als auch der Gegendruckkammer 129 und der Arbeitskammer 134 des Druckluftzylinders 132 sind getrennte Steuerdruckleitungen 142, 143, 144 zugeordnet. Die Steuerdruckluft gelangt dabei vorzugsweise über ein hier nicht dargestelltes Wegeventil gleichzeitig durch die Steuerdruckleitung 142 und die Steuerdruckleitung 144 in die Druckkammer 128 und die Arbeitskammer 134. In der zum Druckluftzylinder 132 führenden Steuerdruckleitung 144 ist ein Druckminderventil 145 angeordnet, welches den Druck der Steuerdruckluft hier so weit reduziert, dass die Steuerdruckluft in Höhe von maximal 7,5 bar in die Arbeitskammer 134 des Druckluftzylinders 132 eingeleitet wird, während die Höhe des Drucks der in die Druckkammer 128 des Pneumatikzylinders 126 eingeführten Steuerdruckluft wesentlich höher ist und etwa bis maximal 20 bar beträgt.

Bei der in der Fig. 4 dargestellten vorteilhaften erfindungsgemässen Ausführung wird zur Inbetriebnahme der Vorrichtung über ein Handventil oder ein Wegeventil der Weg für die Steuerdruckluft durch die Steuerdruckleitungen 142 und 144 freigegeben, so dass die Steuerdruckluft gleichzeitig in die Druckkammer 128 und in die Arbeitskammer 134 gelangt. Da der Druck in der Druckkammer 128 des Pneumatikzylinders 126 grösser ist, wird der Kolben 127 nach oben gedrückt, so dass über das Kolbenrohr 130 die Dichtung 119 vom Ventilsitz 120 abhebt und das Schnellschlussventil 117 schlagartig öffnet. Da die gegen den Hubkolben 133 des Druckluftzylinders 132 nach oben gerichtete Kraft erheblich kleiner ist und die Druckfeder 139 den Hubkolben 133 zudem nach unten drückt, wird das Injektorrohr 112 über das Stösselrohr 135 und die Hubstange 118, die den Kolben 127 und die Dichtung 119 in Gleitbuchsen axial verschiebbar durchsetzt, gegen den Injektorventilsitz 109 gedrückt, so dass das Injektionsventil 108 geschlossen ist. Nach dem Öffnen des Schnellschlussventils 117 strömt die Druckluft durch die Öffnung 124 in das Injektorrohr 112 und durch den Druckluftauslass 110 in die Sonde 107 ein. Der sich vor dem Aufbrechen des Bodens in der Sonde 107 und dem Injektorrohr 112 aufbauende Staudruck gelangt durch die Luftleitung 136 in der Hubstange 118 in die Staudruckkammer 137 des Druckluftzylinders 132 und bewirkt, dass der Hubkolben 133 verstärkt nach unten gedrückt wird, so dass das Injektorrohr 112 mit erhöhter Druckkraft gegen den Injektorventilsitz 109 gepresst wird und ein absolut dichter Verschluss des Injektionsventils 108 gewährleistet ist. Es ist damit mit hoher Sicherheit verhindert, dass nach dem Öffnen des Schnellschlussventils 117 der sich insbesondere bei einem harten Boden in der Sonde 107 aufbauende Staudruck das Injektorventil 108 öffnet und dadurch Druckluft von unten her in den Innenraum 111 des Zwischenbehälters 101 entweicht und eventuell über das vorzugsweise auf etwa 3,4 bar eingestellte Überdruckventil 114 nach aussen gelangt. Der Druck in der Sonde 107 steht somit ausschliesslich zum Aufbrechen des Bodens zur Verfügung.

Nachdem der Boden durch die eingetragene Druckluft aufgebrochen ist, sinkt der Druck in der Sonde 107, dem Injektorrohr 112 und somit auch in der Staudruckkammer 137 ab. Sobald der Druck auf etwa 4 bar abgesunken ist, wird der Hubkolben 133 durch die in der Arbeitskammer aufgebrachte Druckkraft entgegen der Druckfeder 139 nach oben geschoben, so dass über das Stösselrohr 135 und die Hubstange 118 das Injektorrohr 112 vom Injektorventilsitz 109 abgehoben wird. Das Injektionsventil 108 ist damit geöffnet und das im Zwischenbehälter 101 befindliche Substrat kann jetzt durch den aufgrund der Luftströmung am Druckluftauslass 110 eingeleiteten Sog im Injektionsventil 108 nach unten in die Sonde 107 einströmen und in den Boden eingebracht werden. Die Verbauung, das heisst der Eintrag des Substrats und die Verteilung im Boden, ist bei einem Druck unter 3,5 bar in der Gesamtzuluft gemindert und nicht mehr optimal wirksam. Die Steuerdruckluft und die zusätzlich angeordneten Schliessfedern beenden daher durch Schliessen des Injektionsventils 108 und nachfolgend des Schnellschlussventils 117 den Bearbeitungsvorgang. Durch die genannte Reihenfolge ist ein Verstopfen durch Substratreste in der Vorrichtung ausgeschlossen. Ausserdem ist durch die erfindungsgemässe vorbeschriebene Druckluftsteuerung die Entstehung einer Drucklufteinströmung von unten und ein unerwünschter Druckaufbau im Zwischenbehälter 101 ausgeschlossen.

Das Injektionsventil 108 öffnet grundsätzlich erst und nur nach dem Bodenaufbruch. Solange kein Aufbruch des Bodens erfolgt, kann das Injektionsventil 108 nicht öffnen und bleibt mit erhöhter Sicherheit und Schliesskraft geschlossen. Erst bei einem Druckabfall in der Sonde 107 und dem Injektorrohr 112 kann das Injektionsventil 108 öffnen. Die bei geöffnetem Injektionsventil 108 eintretende sehr hohe Luftgeschwindigkeit erzeugt im Bereich des Injektorventilsitzes 109 einen in den Zwischenbehälter 101 hineinwirkenden Unterdruck, so dass das hier zwischen-geschaltete Substrat aus dem trichterförmigen Zwischenbehälter 101 problemlos nach unten austreten kann. Die Bedienung des Schnellschlussventils 117 und des Injektionsventils 108 erfolgt somit erfindungsgemäss getrennt durch je einen separaten Pneumatikzylinder 126 und Druckluftzylinder 132, wobei die zeitliche Verzögerung des Öffnens des Injektionsventils 108 durch den verfahrensgemässen Druckabfall in der Sonde 107 nach dem Aufbruch des Bodens gesteuert wird. Zum Verschliessen des Injektionsventils 108 wird über die Staudruckverbindung zur Staudruckkammer 137 eine Servofunktion ausgeübt, die eine hohe Verschlusskraft für das Injektionsventil 108 gewährleistet. Die Öffnung des Injektionsventils 108 erfolgt somit ausschliesslich druckabhängig. Die Höhe des Staudrucks selbst gibt den Impuls beziehungsweise bestimmt den jeweiligen Zeitpunkt zum Öffnen des Injektionsventils 108. Es ist damit eine durch den vom Bodenaufbruch bestimmte Druckabfallsteuerung des Injektionsventils 108 gegeben, die gewährleistet, dass auch bei unterschiedlichen Bodenbeschaffenheiten (fest verbackener Boden, sandiger Boden) stets eine einwandfreie Funktion gewährleistet ist und ein Substrateintrag im genau richtigen Augenblick nur dann erfolgt, wenn die Druckluft den Boden kurz vorher aufgebrochen hat.

**Patentansprüche**

1. Vorrichtung zum Aufbrechen pflanzenbaulich genutzten Bodens mit einer in den Boden eindringbaren Sonde (50; 107), durch die über ein Schnellschlussventil (3; 117) schlagartig Druckluft und über ein Injektionsventil (55; 108) Substrat in den Boden einbringbar sind, dadurch gekennzeichnet, dass das Schnellschlussventil (3; 117) im oberen Bereich und das Injektionsventil (55, 108) im unteren Bereich eines Zwischenbehälters (1, 101) für das Substrat angeordnet ist und dass dem Schnellschlussventil (3, 117) ein Injektorrohr (12, 112) mit einem Druckluftauslass (15, 110) nachgeordnet ist, das bei geöffnetem Schnellschlussventil (3, 117) von einem Injektorventilsitz (16, 109) des Zwischenbehälters (1, 101) zur Freigabe des Injektionsventils (55, 108) abhebbar ist.

2. Vorrichtung nach Anspruch 1, dadurch gekennzeichnet, dass der Zwischenbehälter (1, 101) mit einer nach unten zur Sonde (50, 107) weisenden Verjüngung kegelförmig und mit dem in der Verjüngung angeordneten Injektionsventil (55, 108), dem in vertikaler Achse im Innenraum (7, 111) angeordneten Injektorrohr (12, 112) und dem axial über dem Injektorventilsitz (16, 109) auf der Oberwandung (2, 113) des Zwischenbehälters (1, 101) angeordneten Schnellschlussventil (3, 117) baueinheitlich ausgebildet und mit der Sonde (50, 107) als kompaktes Handgerät ausgeführt ist.

3. Vorrichtung nach einem der Ansprüche 1 oder 2, dadurch gekennzeichnet, dass das Injektorrohr (12, 112) zur zeitlich verzögerten Freigabe des Injektorventilsitzes (16, 109) nach dem Öffnen des Schnellschlussventils (3, 117) ver- beziehungsweise einstellbar und an einer Hubstange (4, 118) befestigt ist.

4. Vorrichtung nach einem der Ansprüche 1 bis 3, dadurch gekennzeichnet, dass das Injektorrohr (12, 112) an einem Gewinde (11) der Hubstange (4, 118) mit einer Schraubenmutter (13, 13', 123) verstellbar befestigt und mit einer Druckfeder (14, 139) in Richtung gegen den Injektorventilsitz (16, 109) beaufschlagt ist.

5. Vorrichtung nach einem der Ansprüche 1 bis 5, dadurch gekennzeichnet, dass im Innenraum (7, 111) des vorzugsweise aus einem durchsichtigen Kunststoff gebildeten Zwischenbehälters (1, 101) eine sich vom Schnellschlussventil (3, 117) in Richtung zum Injektorventilsitz (16, 109) erstreckende Rohrhülse (8, 115) angeordnet ist, in der das Injektorrohr (12, 112) axial verschiebbar geführt ist.

6. Vorrichtung nach einem der Ansprüche 1 bis 5, dadurch gekennzeichnet, dass die Rohrhülse (8, 115) vorzugsweise dicht unter der Oberwandung (2, 113) des Zwischenbehälters (1, 101) mindestens eine Querbohrung (9, 121) für den Aufbau eines Druckpolsters über dem Substrat im Zwischenbehälter (1, 101) aufweist und dass auf dem Zwischenbehälter (1, 101) ein Überdruckventil (10, 114) angeordnet ist.

7. Vorrichtung nach einem der Ansprüche 1 bis 6, dadurch gekennzeichnet, dass eine Einfüllöffnung (19) für das Substrat über einen vom Innenraum (7) des Zwischenbehälters (1) gegen einen Dichtrand (20) pressbaren Verschlussteil (22) absperrbar ist.

8. Vorrichtung nach einem der Ansprüche 1 bis 7, dadurch gekennzeichnet, dass der Zwischenbehälter (1, 101) mit einem Befestigungsstutzen (26, 105) an der unteren Verjüngung am Gehäuse (37) einer Sondenramme (35) angeordnet ist.

9. Vorrichtung nach einem der Ansprüche 1 bis 8, dadurch gekennzeichnet, dass ein Innenrohr (29, 106) der Sonde (50, 107) die Sondenramme (35) durchsetzt und mit einem Endbereich im Befestigungsstutzen (26, 105) des trichterförmigen Zwischenbehälters (1, 101) unter dem Injektorventilsitz (16, 109) gelagert ist.

10. Vorrichtung nach einem der Ansprüche 1 bis 9, dadurch gekennzeichnet, dass dem Innenrohr (29) eine Nutringdichtung in einer Ausnehmung des Befestigungsstutzens (26, 105) über eine Führungshülse (28) zugeordnet ist.

11. Vorrichtung nach einem der Ansprüche 1 bis 10, dadurch gekennzeichnet, dass am Bund (31) des Innenrohrs (29) ein durch einen Durchbruch (33) des Befestigungsstutzens (26) radial nach aussen ragender Drehhebel (32) angeordnet ist.

12. Vorrichtung nach einem der Ansprüche 1 bis 11, dadurch gekennzeichnet, dass die Sondenramme (35) am Unterteil des Gehäuses (37) einen Distanzring (44) mit an der Umfangsfläche (46) eines dem Innenrohr (29) zugeordneten Ambosses (41) anliegenden Dichtlippen (45) aufweist.

13. Vorrichtung nach einem der Ansprüche 1 bis 12, dadurch gekennzeichnet, dass der Amboss (41) über eine Gleitbuchse (47) in einem Haltebügel (48) geführt ist.

14. Vorrichtung nach einem der Ansprüche 1 bis 13, dadurch gekennzeichnet, dass am Endbereich der Sonde (50) das Innenrohr (29) einen Verschlusskopf (53) mit einer gegen das Mantelrohr (42) wirkenden Dichtung (54) aufweist und dass mindestens eine seitliche Austrittsöffnung (52) vor dem Spitzende (51) des Mantelrohrs (42) bei Nichtaustritt von Druckluft und/oder Substrat durch Verdrehung des Innenrohrs (29) über den Drehhebel (32) verschlossen ist.

15. Vorrichtung nach einem der Ansprüche 1 bis 14, dadurch gekennzeichnet, dass zum einfachen Ausheben der Sonde (50) bei Handbedienung seitlich des Zwischenbehälters (1) zwei pneumatische Hubzylinder angeordnet sind.

16. Vorrichtung nach einem der Ansprüche 1 bis 15, dadurch gekennzeichnet, dass das Schnellschlussventil (117) zum Öffnen und Schliessen mit dem Kolben (127) eines Pneumatikzylinders (126) und das Injektorrohr (112) über die Hubstange (118) mit dem Hubkolben (133) eines Druckluftzylinders (132) gekoppelt ist und dass das Injektorrohr (112) über eine Luftleitung (136) mit einer vom Hubkolben (133) mitbegrenzten Staudruckkammer (137) des Druckluftzylinders (132) so verbunden ist, dass ausschliesslich erst nach einem weitgehenden Druckabfall der den Boden aufbrechenden Druckluft in der Sonde (107) und im Injektorrohr (112) letzteres durch Axialverschiebung des Hubkolbens (133) zur zeitlich verzögerten Freigabe des Injektionsventils (108) vom Injektorventilsitz (109) abhebt.

17. Vorrichtung nach einem der Ansprüche 1 bis 16, dadurch gekennzeichnet, dass der Druckluftzylinder (132) für das Injektionsventil (108) koaxial über dem Pneumatikzylinder (126) des Schnellschlussventils (117) angeordnet und die Luftleitung (136) in der das Schnellschlussventil (117) und den Pneumatikzylinder (126) durchsetzenden Hubstange (118) sowie in einem Stösselrohr (135) des Hubkolbens (133) und in diesem ausgebildet ist.

18. Vorrichtung nach einem der Ansprüche 1 bis 17, dadurch gekennzeichnet, dass die das Injektorrohr (112) in Richtung gegen den Injektorventilsitz (109) belastende Druckfeder (139) in der Staudruckkammer (137) des Druckluftzylinders (132) angeordnet und gegen den Hubkolben (133) gerichtet ist.

19. Vorrichtung nach einem der Ansprüche 1 bis 18, dadurch gekennzeichnet, dass die der Staudruckkammer (137) zugewandte Staudruckfläche (140) des Hubkolbens (133) grösser ist als die die Arbeitskammer (134) des Druckluftzylinders (132) mitbegrenzende Arbeitsfläche (141) des Hubkolbens (133) zum Öffnen des Injektionsventils (108).

20. Vorrichtung nach einem der Ansprüche 1 bis 19, dadurch gekennzeichnet, dass eine Dichtung (119) des Schnellschlussventils (117) mit dem Kolben (127) des Pneumatikzylinders (126) über ein Kolbenrohr (130) verbunden ist, das von der Hubstange (118) des Injektorrohrs (112) axial durchsetzt ist.

21. Vorrichtung nach einem der Ansprüche 1 bis 20, dadurch gekennzeichnet, dass eine Druckkammer (128) des Pneumatikzylinders (126) zum Öffnen und eine Gegendruckkammer (129) zum Sperren des Schnellschlussventils (117) sowie die Arbeitskammer (134) des Druckluftzylinders (132) über je eine getrennte Steuerdruckleitung (142, 143, 144) versorgt sind, dass die Steuerdruckluft vorzugsweise über ein Wegeventil gleichzeitig in die Druckkammer (128) des Pneumatikzylinders (126) und in die Arbeitskammer (134) des Druckluftzylinders (132) einbringbar ist und dass die Höhe des Drucks der der Arbeitskammer (134) des Druckluftzylinders (132) zugeführten Steuerdruckluft vorzugsweise durch Anordnung eines Druckminderventils (145) kleiner ist als die Höhe des Drucks der der Druckkammer (128) des Pneumatikzylinders (126) zugeführten Steuerdruckluft.

## Claims

1. Device for breaking up farmed soil with a probe (50; 107) adapted to penetrate into the soil, through which probe (50; 107) compressed air, explosively, and substrate are, via a quick-closing valve (3; 117) and via an injection valve (55; 108), respectively, introducible into the soil, characterized in that the quick-closing valve (3; 117) and the injection valve (55, 108) are disposed in the upper region and in the lower region, respectively, of an intermediate tank (1, 101) for the substrate and in that the quick-closing valve (3, 117) is followed by an injector tube (12, 112) with a compressed-air outlet (15, 110), said injector tube (12, 112) being adapted with the quick-closing valve (3, 117) open, to lift off an injector-valve seat (16, 109) of the intermediate tank (1, 101) in order to open the injection valve (55, 108).

2. Device according to claim 1, characterized in that the intermediate tank (1, 101) is conical in form with a taper pointing downwards towards the probe (50, 107) and forms one physical unit with the injection valve (55, 108) disposed in the taper, with the injector tube (12, 112) disposed in the vertical axis in the interior (7, 111) and with the quick-closing valve (3, 117) disposed axially above the injector-valve seat (16, 109) on the upper wall (2, 113) of the intermediate tank (1, 101) and is, with the probe (50, 107), in the form of a compact handheld unit.

3. Device according to any one of claims 1 or 2, characterized in that, for the time-delayed opening of the injector-valve seat (16, 109) after the opening of the quick-closing valve (3, 117), the injector tube (12, 112) is adjustable or settable, as appropriate, and is mounted on a lifting rod (4, 118).

4. Device according to any one of claims 1 to 3, characterized in that the injector tube (12, 112) is adjustably mounted with a screw nut (13, 13', 123) on a thread (11) of the lifting rod (4, 118) and is preloaded by a compression spring (14, 139) towards the injector-valve seat (16, 109).

5. Device according to any one of claims 1 to 5, characterized in that disposed in the interior (7, 111) of the intermediate tank (1, 101), said intermediate tank (1, 101) being formed preferably from a transparent plastic, is a tube sleeve (8, 115) extending from the quick-closing valve (3, 117) towards the injector-valve seat (16, 109), the injector tube (12, 112) being axially displaceably guided in said tube sleeve (8, 115).

6. Device according to any one of claims 1 to 5, characterized in that the tube sleeve (8, 115) comprises, preferably closely under the upper wall (2, 113) of the intermediate tank (1, 101), at least one transverse hole (9, 121) for the building-up of a pressure cushion above the substrate in the intermediate tank (1, 101) and in that a pressure-relief valve (10, 114) is disposed on the intermediate tank (1, 101).

7. Device according to any one of claims 1 to 6, characterized in that a filler opening (19) for the substrate is adapted to be shut off by a closing part (22), said closing part (22) being adapted to be pressed against a sealing edge (20) from the interior (7) of the intermediate tank (1).

8. Device according to any one of claims 1 to 7, characterized in that the intermediate tank (1, 101) is disposed on the housing (37) of a probe ram (35) by a mounting nozzle (26, 105) on the lower taper.

9. Device according to any one of claims 1 to 8, characterized in that an inner tube (29, 106) of the probe (50, 107) penetrates the probe ram (35) and is held by an end region in the mounting nozzle (26, 105) of the funnel-shaped intermediate tank (1, 101) under the injector-valve seat (16, 109).

10. Device according to any one of claims 1 to 9, characterized in that the inner tube (29) is, via a guide sleeve (28), assigned a groove-ring seal in a recess of the mounting nozzle (26, 105).

11. Device according to any one of claims 1 to 10, characterized in that disposed on the collar (31) of the inner tube (29) is a rotary lever (32), said rotary lever (32) projecting radially outwards through a penetration (33) of the mounting nozzle (26).

12. Device according to any one of claims 1 to 11, characterized in that the probe ram (35) comprises on the lower part of the housing (37) a spacer ring (44) with sealing lips (45), said sealing lips (45) being in contact with the circumferential surface (46) of an anvil (41) assigned to the inner tube (29).

13. Device according to any one of claims 1 to 12, characterized in that the anvil (41) is guided in a holding bracket (48) via a slide bush (47).

14. Device according to any one of claims 1 to 13, characterized in that at the end region of the probe (50) the inner tube (29) comprises a closing head (53) with a seal (54) acting against the jacket tube (42) and in that at least one lateral outlet opening (52) before the pointed end (51) of the jacket tube (42) is, in case of the non-exit of compressed air and/or substrate, sealed by the turning of the inner tube (29) via the rotary lever (32).

15. Device according to any one of claims 1 to 14, characterized in that, for the simple lifting-out of the probe (50) during manual operation, two pneumatic lifting cylinders are disposed at the side of the intermediate tank (1).

16. Device according to any one of claims 1 to 15, characterized in that the quick-closing valve (117) is, for opening and closing, coupled to the piston (127) of a pneumatic cylinder (126) and the injector tube (112) is coupled via the lifting rod (118) to the lifting piston (133) of a compressed-air cylinder (132) and in that the injector tube (112) is, via an air line (136), so connected to a dynamic-pressure chamber (137) of the compressed-air cylinder (132), said dynamic-pressure chamber (137) being co-limited by the lifting piston (133), that exclusively only after an extensive pressure drop of the soil-ploughing compressed air in the probe (107) and in the injector tube (112) does the latter, through the axial displacement of the lifting piston (133), lift off the injector-valve seat (109) for the time-delayed opening of the injection valve (108).

17. Device according to any one of claims 1 to 16, characterized in that the compressed-air cylinder (132) for the injection valve (108) is disposed coaxially above the pneumatic cylinder (126) of the quick-closing valve (117) and the air line (136) is in the lifting rod (118) penetrating the quick-closing valve (117) and the pneumatic cylinder (126) as well as in a ram tube (135) of the lifting piston (133) and in the latter.

18. Device according to any one of claims 1 to 17, characterized in that the compression spring (139) loading the injector tube (112) towards the injector-valve seat (109) is disposed in the dynamic-pressure chamber (137) of the compressed-air cylinder (132) and is directed against the lifting piston (133).

19. Device according to any one of claims 1 to 18, characterized in that the dynamic-pressure area (140) of the lifting piston (133) facing the dynamic-pressure chamber (137) is greater than the working area (141) of the lifting piston (133) for opening the injection valve (108), said working area (141) co-limiting the working chamber (134) of the compressed-air cylinder (132).

20. Device according to any one of claims 1 to 19, characterized in that a seal (119) of the quick-closing valve (117) is connected to the piston (127) of the pneumatic cylinder (126) via a piston tube (130), said piston tube (130) being axially penetrated by the lifting rod (118) of the injector tube (112).

21. Device according to any one of claims 1 to 20, characterized in that a pressure chamber (128) of the pneumatic cylinder (126) and a counterpressure chamber (129) for the opening and closing, respectively, of the quick-closing valve (117) as well as the working chamber (134) of the compressed-air cylinder (132) are each supplied by separate control-pressure lines (142, 143, 144), in that the control-pressure air is simultaneously introducible, preferably via a directional-control valve, into the pressure chamber (128) of the pneumatic cylinder (126) and into the working chamber (134) of the compressed-air cylinder (132) and in that the pressure of the control-pressure air supplied to the working chamber (134) of the compressed-air cylinder (132) is, preferably through the provision of a pressure-reducing valve (145), lower than the pressure of the control-pressure air supplied to the pressure chamber (128) of the pneumatic cylinder (126).

## Revendications

1. Dispositif pour creuser les sols cultivables à l'aide d'une sonde (50, 107) qui pénètre dans le sol, au travers de laquelle on peut injecter dans le sol de l'air comprimé très rapidement par l'intermédiaire d'une vanne à fermeture rapide (3, 117), et du substrat par l'intermédiaire d'une vanne d'injection (55, 108), caractérisé par le fait que la vanne à fermeture rapide (3, 117) est située dans la partie supérieure et la vanne d'injection (55, 108) dans la partie inférieure d'un réservoir intermédiaire (1, 101) pour le substrat et que, monté en aval de la vanne à fermeture rapide (3, 117), se trouve un tube d'injection (12, 112) muni d'une sortie d'air comprimé (15, 110) qui, lorsque la vanne à fermeture rapide (3, 117) est ouverte, peut être relevé par un siège (16, 109) de la vanne d'injection du réservoir intermédiaire (1, 101), afin de libérer la vanne d'injection (55, 108).

2. Dispositif d'après la revendication 1, caractérisé par le fait que le réservoir intermédiaire conique (1, 101) est de conception uniforme, muni d'un étranglement dirigé vers le bas en direction de la sonde (50, 107) et de la vanne d'injection (55, 108) disposée dans l'étranglement, d'un tube injecteur (12, 112) situé à l'intérieur (7, 111), dans l'axe vertical et de la vanne à fermeture rapide (3, 117) située sur la paroi supérieure (2, 113) du réservoir intermédiaire (1, 101), dans le prolongement du siège de la vanne de l'injecteur (16, 109) et constitue avec la sonde (50, 107) un outillage à main compacte.

3. Dispositif d'après l'une des revendications 1 ou 2 caractérisé par le fait que le tube injecteur (12, 112) est fixé sur une tige (4, 118) et orientable voire réglable pour la libération temporisée du siège (16, 109) de la vanne de l'injecteur, après l'ouverture de la vanne à fermeture rapide (3, 117).

4. Dispositif d'après l'une des revendications 1 à 3 caractérisé par le fait que le tube injecteur (12, 112) est fixé sur un filetage (11) de la tige (4, 118) à l'aide d'un écrou (13, 13', 123) de manière à pouvoir être orienté et actionné contre le siège (16, 109) de la vanne de l'injecteur à l'aide d'un ressort de pression (14, 139).

5. Dispositif d'après l'une des revendications 1 à 5 caractérisé par le fait qu'à l'intérieur (7, 111) du réservoir intermédiaire (1, 101), qui sera de préférence en matière plastique transparente, se trouve un couvre-joint tubulaire (8, 115), s'étendant depuis la vanne à fermeture rapide (3, 117) jusqu'en direction du siège (16, 109) de la vanne de l'injecteur, dans lequel est introduit le tube injecteur (12, 112) de manière à pouvoir être orienté axialement.

6. Dispositif d'après l'une des revendications 1 à 5 caractérisé par le fait que le couvre-joint tubulaire (8, 115) a, de préférence directement en dessous de la paroi supérieure (2, 113) du réservoir intermédiaire (1, 101), au moins un alésage transversal (9, 121) pour le montage d'un rembourrage de pression au-dessus du substrat dans le réservoir intermédiaire (1, 101) et qu'une vanne de surpression (10, 114) se trouve sur le réservoir intermédiaire (1, 101).

7. Dispositif d'après l'une des revendications 1 à 6 caractérisé par le fait qu'un orifice de remplissage (19) pour le substrat peut être fermé par l'intermédiaire d'un obturateur (22) pouvant être plaqué contre une surface d'appui (20) depuis l'intérieur (7) du réservoir intermédiaire (1).

8. Dispositif d'après l'une des revendications 1 à 7 caractérisé par le fait que le réservoir intermédiaire (1, 101) muni d'une tubulure de fixation (26, 105) sur étranglement inférieur est situé sur le corps (37) d'un dameur-sonde (35).

9. Dispositif d'après l'une des revendications 1 à 8 caractérisé par le fait qu'un tube intérieur (29, 106) de la sonde (50, 107) traverse le dameur-sonde (35) et se trouve sous le siège de la vanne de l'injecteur (16, 109) avec une extrémité dans la tubulure de fixation (26, 105) du réservoir intermédiaire en entonnoir (1, 101).

10. Dispositif d'après l'une des revendications 1 à 9 caractérisé par le fait que le tube intérieur (29) est équipé d'un joint en U à lèvres dans un creux de la tubulure de la fixation (26, 105) par l'intermédiaire d'une douille de guidage (28).

11. Dispositif d'après l'une des revendications 1 à 10 caractérisé par le fait que sur le bord (31) du tube intérieur (29) se trouve un levier rotatif (32) débordant vers l'extérieur dans le sens radial à travers une ouverture (33) de la tubulure de fixation (26).

12. Dispositif d'après l'une des revendications 1 à 11 caractérisé par le fait que le dameur-sonde (35) à la partie inférieure du corps (37) est muni d'une entretoise (44) avec des lèvres d'étanchéité (45) qui reposent sur la surface périphérique (46) d'une enclume (41) sur laquelle est monté le tube intérieur (29).

13. Dispositif d'après l'une des revendications 1 à 12 caractérisé par le fait que l'enclume (41) est guidée dans un étrier de retenue (48) par l'intermédiaire d'une douille de glissement (47).

14. Dispositif d'après l'une des revendications 1 à 13 caractérisé par le fait qu'à l'extrémité de la sonde (50) le tube intérieur (29) est muni d'une tête d'obturation (53) avec un joint (54) opérant contre le tube de protection (42) et qu'au moins un orifice de sortie latérale (52) devant l'extrémité pointue (51) du tube de protection (42) est obturé en sollicitant en torsion le tube intérieur (29) par l'intermédiaire du levier rotatif (32) lorsque l'air comprimé et/ou le substrat ne sort pas.

15. Dispositif d'après l'une des revendications 1 à 14 caractérisé par le fait que deux vérins de levage pneumatiques sont disposés sur les côtés du réservoir intermédiaire (1) sur commande manuelle, afin d'extraire la sonde (50) simplement.

16. Dispositif d'après l'une des revendications 1 à 15 caractérisé par le fait que la vanne de fermeture rapide (117) pour l'ouverture et la fermeture est couplée au piston (127) d'un vérin pneumatique (126) et le tube injecteur (112) au piston (133) d'un vérin à air comprimé (132) par l'intermédiaire de la tige (118) et que le tube injecteur (112) est relié à une chambre de pression dynamique (137) limitée par le piston (133) par l'intermédiaire d'une conduite d'air (136) du vérin à air comprimé (132) de telle sorte que le tube injecteur (112) ne se relève du siège (109) de la vanne de l'injecteur après avoir déplacé le piston dans le sens axial (133) pour la libération temporisée de la vanne d'injection (108), qu'après une forte chute de pression, dans la sonde (107) et dans le tube injecteur (112), de l'air comprimé injecté dans le sol.

17. Dispositif d'après l'une des revendications 1 à 16 caractérisé par le fait que le vérin à air comprimé (132) pour la vanne d'injection (108) est monté coaxialement au-dessus du vérin pneumatique (126) de la vanne à fermeture rapide (117) et que la conduite d'air (136) se trouve dans la tige (118) qui traverse la vanne à fermeture rapide (117) et le vérin pneumatique (126) aussi bien dans un tube-dameur (135) du piston (133) que dans ce dernier.

18. Dispositif d'après l'une des revendications 1 à 17 caractérisé par le fait que le ressort de pression (139) qui plaque le tube injecteur (112) contre le siège de la vanne de l'injecteur (109) est disposé dans la chambre de pression dynamique (137) du vérin à air comprimé (132) et est dirigé contre le piston (133).

19. Dispositif d'après l'une des revendications 1 à 18 caractérisé par le fait que la surface de pression dynamique (140) du piston (133) dirigée vers la chambre de pression dynamique (137) est plus grande que la surface de travail (141) du piston (133) qui réduit la chambre de travail (134) du vérin à air comprimé (132) pour l'ouverture de la vanne d'injection (108).

20. Dispositif d'après l'une des revendications 1 à 19 caractérisé par le fait qu'un joint (119) de la vanne à fermeture rapide (117) est relié au piston (127) du vérin pneumatique (126) par l'intermédiaire d'un tube de piston (130) qui est traversé dans le sens axial par la tige (118) du tube injecteur (112).

21. Dispositif d'après l'une des revendications 1 à 20 caractérisé par le fait qu'une chambre de pression (128) du vérin pneumatique (126) pour l'ouverture et une chambre de contre-pression (129) pour la verrouillage de la vanne à fermeture rapide (117) ainsi que la chambre de travail (134) du vérin à air comprimé (132) sont alimentées respectivement par une conduite séparée de pression de pilotage (142, 143, 144), caractérisé également par le fait que l'air comprimé de pilotage peut être introduit simultanément dans la chambre de pression (128) du vérin pneumatique (126) et dans la chambre de travail (134) du vérin à air comprimé (132), de préférence par l'intermédiaire d'un distributeur, et que la pression de l'air comprimé de pilotage introduit dans la chambre de travail (134) du vérin à air comprimé (132) est inférieure à la pression de l'air comprimé de pilotage introduit dans la chambre de pression (128) du vérin pneumatique (126), de préférence grâce à l'installation d'une vanne de détente (145).

Fig. 1

FIG. 1a

FIG. 1b

0 128 173

Fig:2

0 128 173

**Fig. 3**

0 128 173

FIG. 4

138
139
137
125'
133
140
141
132
134
131'
135

max. 7,5 bar

144

145

136
129
127
126
128
131

143

142

max. 20 bar

130
125
118
124
119
117
113
120
114
123
122
121
103
116
115
104
101
111
112
102
108
109
105
110
107
106

19